# EUROPÄISCHE PATENTANMELDUNG

(11) **EP 4 350 113 A2**
(43) Veröffentlichungstag der Anmeldung: **10.04.2024**
(21) Anmeldenummer: 24158747.6
(22) Anmeldetag: 05.05.2020
(51) Int. Cl.: E06B 3/964

(54) **VORRICHTUNG UND VERFAHREN FÜR DIE HERSTELLUNG EINES ELEMENTES**

(30) Priorität: 07.05.2019 DE 102019111808
(62) Teilanmeldung aus: 20173075.1
(71) Anmelder: Urban GmbH & Co. Maschinenbau KG, 87700 Memmingen (DE)
(72) Erfinder: Schwörendt, Torsten, 87448 Waltenhofen (DE)
(74) Vertreter: Patentanwälte Olbricht, Buchhold, Keulertz Partnerschaft mbB

(57) **Zusammenfassung**

Die Erfindung betrifft eine Vorrichtung für die Herstellung eines kreuzartigen Elementes aus mindestens drei, an den Kontaktflächen ihrer Enden miteinander verbundenen Kunststoff-Profilstäben sowie ein Verfahren für die Herstellung eines kreuzartigen Elementes aus mindestens drei, an den Kontaktflächen ihrer Enden miteinander verbundenen Kunststoff-Profilstäben.

## Beschreibung

Die Erfindung betrifft eine Vorrichtung und ein Verfahren für die Herstellung eines insbesondere kreuzartigen Elementes aus mindestens drei, an den Kontaktflächen ihrer Enden miteinander verbundenen Kunststoff-Profilstäben.

Kunststofffenster besitzen in der Regel einen aus mehreren Kunststoff-Profilstäben bestehenden, oftmals rechteckigen, Rahmen. Dies gilt sowohl bei dem in die Hausöffnung einzusetzenden Stockrahmen wie auch bei dem an dem Stockrahmen drehbar gelagerten Fensterrahmen.

Bei einem Fensterrahmen ist es auch bekannt, die von dem Rahmen eingefasste Fläche durch mehrere Streben, Kämpfer oder Sprossen zu unterteilen, diese Teile treffen sich dann in der Fläche des Rahmens vorzugsweise kreuzartig, also in einem rechten Winkel ohne aber hierauf die Offenbarung zu beschränken.

Wird nun der gesamte Fensterrahmen, also bestehend aus dem außenliegenden Rahmen und den darin innenliegenden Teilen aus Kunststoff-Profilstäben gefertigt, so muss produktionsbedingt zuerst das von dem Rahmen eingefasste, aus mehreren Teilen bestehende Element hergestellt werden, welches hernach mit den außenliegenden, den Rahmen definierenden Profilstäben verbunden wird.

Dabei bildet ein solches Element oftmals ein Kreuz, d.h. die einzelnen Profilstäbe sind jeweils an ihren Enden mit weiteren Profilstäben verbunden, derart, dass sich z.B. ein aus vier Profilstäben ergebendes, jeweils aneinander einen rechten Winkel einschließendes Kreuz ergibt.

Zur Herstellung ist es hierzu bekannt zunächst die Profilstäbe in der notwendigen Länge bereitzustellen und diese zumindest an einem Ende (wo diese zusammenstoßen, nachfolgend auch Verbindungsbereich genannt) winkelig zuzuschneiden, derart, dass ein erster Profilstab am Verbindungsbereich mit einem zweiten und dritten Profilstab gleichzeitig verbunden werden kann. An dem Profilstab werden daher durch das Zuschneiden zwei winkelig zueinander stoßende Kontaktflächen erzeugt.

Nachdem die Profilstäbe entsprechend hergerichtet und bereitgestellt sind, werden diese in der Regel händisch verschweißt, d.h. die Kontaktflächen werden jeweils mit einem Heizelement oder Heizspiegel erwärmt bis sich der Kunststoff plastifiziert und hernach, nachdem der Heizspiegel entfernt ist, werden die zu verbindenden Kunststoff- Profilstäbe zueinander gefügt und materialschlüssig verbunden, das heißt verschweißt.

Bei dieser Vorgehensweise ist es im Stand der Technik fast unvermeidbar, dass an den Kontaktflächen seitlich Kunststoffmaterial, der sogenannte Schweißwulst, austritt, der in einem nachfolgenden Bearbeitungsschritt zu entfernen ist, was in einer sogenannten Verputzmaschine, halbautomatisch oder automatisch erfolgt.

Der Herstellung dieser insbesondere kreuzförmigen Elemente ist im Stand der Technik sowohl zeit- wie auch kostenaufwändig, und auch die Ästhetik der Sichtflächen des Verbindungsbereiches ist nicht optimal.

Die vorliegende Erfindung hat es sich zur Aufgabe gemacht, zumindest einen der vorgenannten Nachteile des Standes der Technik zu verbessern.

Zur Lösung dieser Aufgabe geht die Erfindung aus von einer Vorrichtung für die Herstellung eines kreuzartigen Elementes aus mindestens drei, an den Kontaktflächen ihrer Enden miteinander verbundenen Kunststoff-Profilstäben, wobei die Vorrichtung mindestens Folgendes umfasst:
- eine Aufspannvorrichtung für jeden Profilstab, die zumindest derart beweglich gelagert und durch einen Antrieb bewegbar ist, um den jeweiligen Profilstab parallel zu seiner Längserstreckung zu bewegen und zu positionieren,
- mindestens ein winkelig ausgebildetes Heizelement zum Erwärmen bzw. Plastifizieren der endseitigen, vorzugsweise winkelig ausgestalteten Kontaktflächen bzw. -bereiche der Profilstäbe,
- mindestens ein Bearbeitungswerkzeug für die Bearbeitung der jeweiligen Kontaktfläche bzw. -bereiche und/oder der Sichtflächen des Verbindungsbereiches des Elementes, und
- mindestens drei Aufspannvorrichtungen, die ausgebildet sind, um darin aufgespannte Profilstäbe in Richtung des gemeinsamen Verbindungsbereiches aufeinander zu bewegen.

Die erfindungsgemäße Aufgabe wird aber auch durch ein Verfahren für die Herstellung eines kreuzartigen Elementes aus mindestens drei, an den Kontaktflächen ihrer Enden miteinander verbundenen Kunststoff-Profilstäben gelöst, das zumindest die folgenden Schritte umfasst:
- Bereitstellen und Aufspannen jedes zu verbindenden Profilstabes auf einer Aufspannvorrichtung,
- Materialabhebende Bearbeitung der jeweiligen Kontaktfläche bzw. -bereiche und/oder der Sichtflächen des Verbindungsbereiches des Elementes vor dem Erwärmen,
- Erwärmen bzw. Plastifizieren der endseitigen Kontaktflächen bzw. -bereiche der Profilstäbe, für ein daran dann anschließendes Fügen und Verbinden der Profilstäbe,
- Bewegen der in den Aufspannvorrichtungen aufgespannten Profilstäbe in Richtung des gemeinsamen Verbindungsbereiches aufeinander zu, und
- Fügen und Verbinden der Profilstäbe.

Der Pfiff der Erfindung liegt darin, dass in einer Maschine bzw. Vorrichtung das Plastifizieren und Fügen, also der Verschweißprozess mit einer Vor- und/oder Nachbearbeitung durch ein Bearbeitungswerkzeug kombiniert wird, wobei vorzugsweise die Aufspannung der Profilstäbe auf die jeweiligen Aufspannvorrichtungen während des Herstellprozesses nicht gelöst wird.

Diese dauerhafte Aufspannung hat den Vorteil, dass die relative Lage der miteinander zu verbindenden Kontaktflächen der Profilstäbe zwischen den einzelnen Bearbeitungsschritten unverändert bleibt, und daher eine exakte Vorbereitung der Kontaktflächen kombiniert mit einem optimierten Erwärmungs- bzw. Plastifizierungsprozess in eine Schweißverbindung resultiert, die möglichst schweißwulstarm ausgestaltet ist und daher nicht oder nur kaum nachbearbeitet werden muss, also keine oder nur eine geringe Nachbearbeitung benötigt, ohne aber dabei die Festigkeit der Verbindung zu reduzieren. Aufgrund der genauen Vorbereitung der Kontaktflächen der Profilstäbe, bzw. einer geschickten Verfahrensführung wird die Festigkeit der Verbindung nicht verschlechtert.

Der erfindungsgemäße Vorschlag verbessert bereits erheblich die ästhetische Ausgestaltung eines Elementes, welches mit der erfindungsgemäßen Vorrichtung oder nach dem erfindungsgemäßen Verfahren hergestellt wird.

Überraschenderweise erreicht die Erfindung aber auch eine erhebliche Reduktion der Herstellungskosten. Die automatisierte Fertigung spart Zeit und auch das Halten des bereits fertig hergestellten Elementes in den jeweiligen Aufspannvorrichtungen begünstigt eine hohe Prozesssicherheit, da das Element erst nach einer ausreichenden Abkühlzeit, wenn der Schweißbereich ausreichend stabil ist, aus der Vorrichtung entnommen werden kann. Da die Ausschussproduktion dadurch erheblich reduziert wird, sinken die Herstellungskosten auch unter diesem Aspekt.

Darüber hinaus ist der erfindungsgemäße Vorschlag, sowohl für das Verfahren wie auch für die Vorrichtung, sehr variabel. Mindestens ein Bearbeitungswerkzeug wird entweder vor dem Erwärmen oder auch nach dem Erwärmen, gegebenenfalls auch zu beiden Zeitpunkten, je nach gewünschter Prozessführung, eingesetzt.

Die Erfindung ist, zusammengefasst, sehr variabel in der Prozessführung, erreicht hohe Prozesssicherheit sowie optisch sehr ansprechende Verbindungsbereiche und steigert durch verkürzte Bearbeitungszeiten erheblich die Effizienz und daher die Wertschöpfung.

Des Weiteren ist erfindungsgemäß vorgesehen, dass die Vorrichtung mindestens drei Aufspannvorrichtungen aufweist. Natürlich ist es möglich, dass die Vorrichtung auch mehr als drei Aufspannvorrichtungen (z.B. vier, fünf, sechs oder noch mehr) aufweist, wenn eben mehr als drei Profilstäbe im Verbindungsbereich an dem Verbinden zu dem Element beteiligt sind. Charakteristisch dabei ist, dass die eingesetzten Profilstäbe durch die Aufspannvorrichtungen, auf welchen diese aufgespannt sind, sowohl bei der Plastifizierungsphase, wie auch bei dem nachfolgenden Fügeprozess aufeinander zu bewegt werden, also in Richtung des gemeinsamen Verbindungsbereiches. Diese Bewegung kann sternförmig oder T-förmig sein.

Vorteilhafter Weise werden dabei alle beteiligten Kontaktflächen gleichzeitig erwärmt und auch alle Profilstäbe hernach gefügt, also geschweißt. Eine solche Vorgehensweise gewährleistet eine hohe Produktionssicherheit und spart auch Zeit, wenngleich die Erfindung auch Lösungen umfasst, bei welchen das Element nicht in einem einzigen Schritt hergestellt (einerseits erwärmt, andererseits gefügt) wird, sondern die Herstellung des Elementes in zwei oder mehreren Teilschritten erfolgt, bei welchen jeweils ein Teil des Elementes in gleicher Weise produziert wird.

Bei einer bevorzugten Ausgestaltung des Vorschlags ist vorgesehen, dass für das mindestens eine Heizelement je eine Führung und ein Antrieb vorgesehen ist, um das mindestens eine Heizelement entlang einer Anstellrichtung zwischen einer Plastifizierungs- und einer Vorhalteposition zu verfahren.

Des Weiteren ist vorgesehen, dass die Bewegungsrichtungen der Aufspannvorrichtungen auf Höhe der Mittelachse der Profilstäbe eine Bewegungsebene definieren, und die Anstellrichtung mit der Bewegungsebene einen spitzen bis rechtwinkeligen, vorzugsweise einen rechten Winkel einschließt. Die so definierte Bewegungsebene stellt eine Bezugsfläche für die weitere Beschreibung dar. Natürlich ist es möglich, anstelle der Höhe der Mittelachse der Profilstäbe auch auf die Lage der Führungen abzustellen, auf welchen die Aufspannvorrichtungen beweglich geführt sind. Die vorgeschlagene Anordnung erreicht, dass die Bewegung des Heizelementes/Heizspiegels nicht mit der Bewegung der Profilstäbe kollidiert bzw. den geringeren Platz in der Bewegungsebene weiter verengt. Geschickter Weise wird die Anstellrichtung rechtwinklig zur Bewegungsebene definiert, und somit das Heizelement von oben oder unten in den Verbindungsbereich angestellt.

In einer vorteilhaften Ausgestaltung ist vorgesehen, dass das mindestens eine Bearbeitungswerkzeug an einem beweglich gelagerten und positionierbaren Werkzeugträger angeordnet ist. Es ist von Vorteil, wenn das Bearbeitungswerkzeug oder die Bearbeitungswerkzeuge im Raum komfortabel positioniert werden, so sind neben einer Bearbeitung der Kontaktflächen der Profilstäbe oder Sichtflächen des Elementes auch andere Bearbeitungen an dem Element bzw. den Profilstäben möglich. Vorteilhafter Weise trägt dabei der Werkzeugträger nicht nur ein Bearbeitungswerkzeug, sondern auch mehrere unterschiedliche, um so auch unterschiedliche Bearbeitung auszuführen. Günstiger Weise ist der Werkzeugträger mit dem Bearbeitungswerkzeug zumindest entlang einer, vorteilhafter Weise aber bezüglich zweier oder dreier Raumachsen beweglich angeordnet. Für die Bewegung des Werkzeugträgers ist ein entsprechender Antrieb vorgesehen. Der Antrieb des Werkzeugträgers bewegt somit auch das Bearbeitungswerkzeug während seiner Bearbeitung und positioniert so das Bearbeitungswerkzeug an den gewünschten Stellen. Gegebenenfalls nimmt der Werkzeugträger auch einen Antrieb für das Bearbeitungswerkzeug (zum Beispiel einen Antriebsmotor für einen Fräser) auf.

Geschickter Weise ist vorgesehen, dass ein Portal über der Aufspannvorrichtung vorgesehen ist, das mindestens ein Bearbeitungswerkzeug und/oder einen Heizspiegel trägt und diese zumindest teilweise positioniert. Der erfindungsgemäße Vorschlag ein Portal für die Positionierung des Bearbeitungswerkzeuges und/oder des Heizelementes/Heizspiegels einzusetzen, erlaubt in einfacher Weise eine hohe Beweglichkeit dieser Bauteile. Da üblicherweise das Bearbeitungswerkzeug nicht gleichzeitig mit dem Heizelement in Einsatz kommt, können diesen beiden Bauteile auch einen gemeinsamen Träger besitzen, was den Aufbau vereinfacht. Das Portal ist dabei in einer Ebene über der Bewegungsebene angeordnet und behindert somit nicht die Bewegung der Aufspannvorrichtungen. Günstiger Weise erlaubt das Portal dann auch eine Grobpositionierung des mindestens einen Bearbeitungswerkzeuges und/oder des Heizelementes, die exakte Positionierung erfolgt dann gegebenenfalls noch durch einen separaten Positionsantrieb des Bearbeitungswerkzeuges (gegebenenfalls seines Werkzeugträgers) oder des Heizelementes.

In einer weiteren bevorzugten Ausführungsform ist vorgesehen, dass ein mehrgelenkiger Roboterarm vorgesehen ist, der mindestens ein Bearbeitungswerkzeug und/oder einen Heizspiegel trägt und diese zumindest teilweise positioniert. Der Vorzug des Einsatzes eines mehrgelenkiger Roboterarmes für die Positionierung des mindestens einen Bearbeitungswerkzeuges und/oder des Heizelementes/Heizspiegels liegt in der hohen Beweglichkeit des Roboterarmes, der eine fast unbegrenzte Ausrichtung oder Anstellung des jeweiligen Bauteiles erlaubt. Natürlich ist der Einsatz des Roboterarmes auch nur auf Spezialaufgaben zu beschränken, wobei bei geschickter Prozessführung auch eine Parallelbearbeitung einerseits mit dem Roboterarm, andererseits mit dem Portal oder anderen Bauteilen möglich ist.

Des Weiteren ist günstiger Weise vorgesehen, dass ein spanabhebendes Bearbeitungswerkzeug, wie zum Beispiel ein Messer, Fräser oder Bohrer vorgesehen ist.

Vorteilhafter Weise ist vorgesehen, dass zumindest eine Aufspannvorrichtung zusätzlich auch winkelig bis rechtwinkelig zur Bewegungsebene beweg- und positionierbar ist. Dadurch ist es möglich auch verhältnismäßig komplexe Elemente herzustellen.

Vorteilhafter Weise ist vorgesehen, dass die Vorrichtung zur Durchführung des erfindungsgemäßen Verfahrens ausgebildet ist.

Des Weiteren ist in dem Vorschlag vorteilhafter Weise vorgesehen, dass die Schritte dieses Verfahrens genau in folgender Reihenfolge erfolgen:
- Bereitstellen und Aufspannen jedes zu verbindenden Profilstabes auf einer Aufspannvorrichtung,
- Materialabhebende Bearbeitung der jeweiligen Kontaktfläche bzw. -bereiche,
- Erwärmen bzw. Plastifizieren der endseitigen Kontaktflächen bzw. -bereiche der Profilstäbe, und
- Fügen und Verbinden der Profilstäbe.

Alternativ hierzu ist vorgesehen, dass das Verfahren genau in folgender Abfolge der folgenden Schritte durchgeführt wird:
- Bereitstellen und Aufspannen jedes zu verbindenden Profilstabes auf einer Aufspannvorrichtung,
- Erwärmen bzw. Plastifizieren der endseitigen Kontaktflächen bzw. -bereiche der Profilstäbe,
- Fügen und Verbinden der Profilstäbe, und
- materialabhebende Bearbeitung zumindest der Sichtfläche des Elementes im Verbindungsbereich der Profilstäbe.

Beiden Alternativen kann gemein sein, dass der Schritt des
- Bewegens der in den Aufspannvorrichtungen aufgespannten Profilstäbe in Richtung des gemeinsamen Verbindungsbereiches aufeinander zu
unmittelbar vor dem Fügen und Verbinden der Profilstäbe erfolgt, so dass sich dieser Schritt in die Abfolge der Verfahrensschritte jeder der beiden Alternativen einsortiert.

Beide Alternativen lösen das eingangs beschriebene Problem, wobei sich die Erfindung insbesondere dadurch auszeichnet, dass für die Erreichung des erfindungsgemäßen Erfolges zwei alternative Wege bestehen! Natürlich ist es möglich diese beiden Konzepte miteinander zu kombinieren, weswegen in einer vorteilhaften Weiterentwicklung gerade des ersten Vorschlages vorgesehen wird, dass nach dem Fügen eine materialabhebende Bearbeitung zumindest der Sichtfläche des Elementes im Verbindungsbereich der Profilstäbe erfolgt.

Diese materialabhebende Bearbeitung nach dem Fügen entspricht dem Verputzvorgang, wie er im Stand der Technik bekannt ist, wobei sich dieses Verputzen nicht nur auf die Sichtflächen beschränkt, sondern alternativ auch an den Seitenflächen des Profiles, welche die Sichtflächen miteinander verbindet, ebenfalls ausgeführt werden kann.

Bei einer bevorzugten Ausgestaltung des Vorschlags ist deshalb vorgesehen, dass nach dem Fügen eine materialabhebende Bearbeitung zumindest der die Sichtflächen des Elementes im Verbindungsbereich der Profilstäbe verbindende Seitenflächen erfolgt. Es ist klar, dass bei einem aus drei, vier, fünf oder noch mehr Profilstäben zusammengesetzten Element, eine Vielzahl von Innenecken, die ja die Verbindungslinie zwischen den Sichtflächen beschreibt, zu bearbeiten ist. Dabei ist es günstig, dass das mindestens eine Bearbeitungswerkzeug in diesem Bereich komfortabel zu positionieren ist, wofür die Offenbarung ebenfalls entsprechende Vorschläge macht.

Des Weiteren kann vorgesehen sein, dass nach dem Erwärmen und vor dem Fügen eine weitere materialabhebende Bearbeitung der jeweiligen Kontaktflächen bzw. -bereiche und/oder der Sichtflächen des Verbindungsbereiches des Elementes erfolgt. Überraschenderweise ist gefunden worden, dass bei einer solchen Prozessführung das Arbeitsergebnis ebenfalls erheblich verbessert wird. Dabei schließt die Erfindung nicht aus, dass vor dem Fügen die Profilstäbe mehr als einmal spanabhebend bzw. materialabhebend bearbeitet oder die Kontaktflächen der Profilstäbe mehrfach erwärmt werden und der Prozess Erwärmen - Materialentfernung mehrfach durchgeführt wird.

In einer vorteilhaften Ausgestaltung ist daher vorgesehen, dass nach einem ersten Erwärmen eine weitere materialabhebende Bearbeitung der jeweiligen Kontaktflächen bzw. -bereiche und/oder der Sichtflächen des Verbindungsbereiches des Elementes und vor dem Fügen ein zweites Erwärmen erfolgt.

Geschickter Weise ist vorgesehen, dass während der materialabhebenden Bearbeitung und dem Fügen der Profilstäbe die Aufspannung nicht gelöst wird.

In diesem Zusammenhang wird insbesondere darauf hingewiesen, dass alle in Bezug auf die Vorrichtung beschriebenen Merkmale und Eigenschaften, aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur in Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung für die Herstellung eines kreuzartigen Elementes aus mindestens drei, an den Kontaktflächen ihrer Enden miteinander verbundenen Kunststoff-Profilstäben, wobei die Vorrichtung mindestens folgendes umfasst:
- eine Aufspannvorrichtung für jeden Profilstab, die zumindest derart beweglich gelagert und durch einen Antrieb bewegbar sind, um den jeweiligen Profilstab parallel zu seiner Längserstreckung zu bewegen und zu positionieren,
- mindestens ein winkelig ausgebildetes Heizelement zum Erwärmen bzw. Plastifizieren der endseitigen, vorzugsweise winklig ausgestalteten Kontaktflächen bzw. -Bereiche der Profilstäbe,
- mindestens ein Bearbeitungswerkzeug für die Bearbeitung der jeweiligen Kontaktfläche bzw. -Bereiche und/oder der Sichtflächen des Verbindungsbereiches des Elementes, und
- mindestens drei Aufspannvorrichtungen, die ausgebildet sind, um darin aufgespannte Profilstäbe in Richtung des gemeinsamen Verbindungsbereiches aufeinander zu bewegen.

2. Vorrichtung nach Anspruch 1, **dadurch gekennzeichnet, dass** die Vorrichtung für das mindestens eine Heizelement je eine Führung und ein Antrieb vorgesehen ist, um das mindestens eine Heizelement entlang einer Anstellrichtung zwischen einer Plastifizierungs- und einer Vorhalteposition zu verfahren.

3. Vorrichtung nach einem der vorhergehenden Ansprüche, **dadurch gekennzeichnet, dass** die Bewegungsrichtungen der Aufspannvorrichtungen auf Höhe der Mittelachse der Profilstäbe eine Bewegungsebene definiert, und die Anstellrichtung mit der Bewegungsebene einen spitzen bis rechtwinkligen, vorzugsweise einen rechten Winkel einschließt und/oder ein spanabhebendes Bearbeitungswerkzeug, wie zum Beispiel ein Messer, Fräser oder Bohrer vorgesehen ist und/oder zumindest eine Aufspannvorrichtung zusätzlich auch winkelig bis rechtwinklig zur Bewegungsebene beweg- und positionierbar ist.

4. Vorrichtung nach einem der vorhergehenden Ansprüche, **dadurch gekennzeichnet, dass** das mindestens eine Bearbeitungswerkzeug an einem beweglich gelagerten und positionierbaren Werkzeugträger angeordnet ist und/oder ein Portal über der Aufspannvorrichtung vorgesehen ist, das mindestens ein Bearbeitungswerkzeug und/oder einen Heizelement trägt und diese zumindest teilweise positioniert und/oder ein mehrgelenkiger Roboterarm vorgesehen ist, der mindestens ein Bearbeitungswerkzeug und/oder Heizelement trägt und diese zumindest teilweise positioniert.

5. Vorrichtung nach einem der vorhergehenden Ansprüche, **dadurch gekennzeichnet, dass** das sie zur Durchführung des Verfahrens nach einem der Ansprüche 6 bis 12 ausgebildet ist.

6. Verfahren für die Herstellung eines kreuzartigen Elementes aus mindestens drei, an den Kontaktflächen ihrer Enden miteinander verbundenen Kunststoff-Profilstäben, zumindest umfassend die folgenden Schritte:
- Bereitstellen und Aufspannen jedes zu verbindenden Profilstabes auf einer Aufspannvorrichtung,
- Materialabhebende Bearbeitung der jeweiligen Kontaktfläche bzw. -bereiche und/oder der Sichtflächen des Verbindungsbereiches des Elementes vor dem Erwärmen,
- Erwärmen bzw. Plastifizieren der endseitigen Kontaktflächen bzw. -bereiche der Profilstäbe, für ein daran dann anschließendes Fügen und Verbinden der Profilstäbe,
- Bewegen der in den Aufspannvorrichtungen aufgespannten Profilstäbe in Richtung des gemeinsamen Verbindungsbereiches aufeinander zu, und
- Fügen und Verbinden der Profilstäbe.

7. Verfahren nach dem vorhergehenden Anspruch 6, **dadurch gekennzeichnet, dass** die Schritte dieses Verfahrens genau in folgender Reihenfolge erfolgen:
- Bereitstellen und Aufspannen jedes zu verbindenden Profilstabes auf einer Aufspannvorrichtung,
- Materialabhebende Bearbeitung der jeweiligen Kontaktfläche bzw. -bereiche,
- Erwärmen bzw. Plastifizieren der endseitigen Kontaktflächen bzw. -bereiche der Profilstäbe, und
- Fügen und Verbinden der Profilstäbe.

8. Verfahren nach einem der vorhergehenden Ansprüche 6 oder 7, **dadurch gekennzeichnet, dass** nach dem Fügen eine materialabhebende Bearbeitung zumindest der Sichtfläche des Elementes im Verbindungsbereich der Profilstäbe erfolgt.

9. Verfahren nach dem vorhergehenden Anspruch 6, **dadurch gekennzeichnet, dass** die Schritte dieses Verfahrens genau in folgender Reihenfolge erfolgen:
- Bereitstellen und Aufspannen jedes zu verbindenden Profilstabes auf einer Aufspannvorrichtung,
- Erwärmen bzw. Plastifizieren der endseitigen Kontaktflächen bzw. -bereiche der Profilstäbe,
- Fügen und Verbinden der Profilstäbe, und
- materialabhebende Bearbeitung zumindest der Sichtfläche des Elementes im Verbindungsbereich der Profilstäbe.

10. Verfahren nach einem der vorhergehenden Ansprüche 6 bis 9, **dadurch gekennzeichnet, dass** nach dem Erwärmen und vor dem Fügen eine weitere materialabhebende Bearbeitung der jeweiligen Kontaktfläche bzw. -bereiche und/oder der Sichtflächen des Verbindungsbereiches des Elementes erfolgt.

11. Verfahren nach einem der vorhergehenden Ansprüche 6 bis 10, **dadurch gekennzeichnet, dass** nach einem ersten Erwärmen eine weitere materialabhebende Bearbeitung der jeweiligen Kontaktfläche bzw. -bereiche und/oder der Sichtflächen des Verbindungsbereiches des Elementes und vor dem Fügen ein zweites Erwärmen erfolgt und/oder während der materialabhebenden Bearbeitung und dem Fügen der Profilstäbe die Aufspannung nicht gelöst wird.

12. Verfahren nach einem der vorhergehenden Ansprüche 6 bis 11, **dadurch gekennzeichnet, dass** nach dem Fügen und Verbinden der Profilstäbe eine metarialabhebende Bearbeitung zumindest der die Sichtflächen des Elementes im Verbindungsbereich der Profilstäbe verbindenden Seitenflächen erfolgt.
